# EUROPEAN PATENT APPLICATION

(11) **EP 4 060 366 A1**
(43) Date of publication of application: **21.09.2022**
(21) Application number: 21163586.7
(22) Date of filing: 19.03.2021
(51) Int. Cl.: G01S 7/00, G01S 7/41, G01S 13/88, G01S 13/87, A63B 24/00, G06K 9/00, G09B 19/00

(54) **METHODS, DEVICE, LOCAL DEVICE AND SERVER FOR MONITORING A USER PERFORMING A PHYSICAL EXERCISE**

(71) Applicant: Infineon Technologies AG, 85579 Neubiberg (DE)
(72) Inventor: SCHWABE, Benjamin, 81541 München (DE); STROBEL, Maximilian, 81539 München (DE)
(74) Representative: 2SPL Patentanwälte PartG mbB

(57) **Abstract**

A method for monitoring a user performing a physical exercise is provided. The method includes performing a radar measurement of the user (101) performing the physical exercise using a radar sensor (110). The radar sensor outputs radar data indicative of the radar measurement. Further, the method includes determining a type of the physical exercise based on the radar data using a trained machine-learning model. In addition, the method includes determining an execution quality of the physical exercise based on the radar data and the determined type of the physical exercise using the trained machine-learning model. The method includes outputting monitoring data (121) indicative of at least the determined execution quality of the physical exercise.

## Description

### Field

The present disclosure relates to user monitoring. In particular, examples relate to methods, a device, a local device and a server for monitoring a user performing a physical exercise.

### Background

When executed correctly by a user, exercises such as pushups or lateral raises allow to increase a fitness of the user. However, the user may suffer from injuries when incorrectly executing the exercises. For example, incorrectly executed pushups may result in issues with the lower back and the shoulders.

Hence, there may be a demand for monitoring a user while the user is performing a physical exercise.

### Summary

The demand may be satisfied by the subject-matter of the appended claims.

An example relates to a method for monitoring a user performing a physical exercise. The method comprises performing a radar measurement of the user performing the physical exercise using a radar sensor. The radar sensor outputs radar data indicative of the radar measurement. Further, the method comprises determining a type of the physical exercise based on the radar data using a trained machine-learning model. In addition, the method comprises determining an execution quality of the physical exercise based on the radar data and the determined type of the physical exercise using the trained machine-learning model. The method comprises outputting monitoring data indicative of at least the determined execution quality of the physical exercise.

Another example relates to a device for monitoring a user performing a physical exercise. The device comprises a radar sensor configured to perform a radar measurement of the user performing the physical exercise and output radar data indicative of the radar measurement. Further, the device comprises processing circuitry configured to determine a type of the physical exercise based on the radar data using a trained machine-learning model. The processing circuitry is additionally configured to determine an execution quality of the physical exercise based on the radar data and the determined type of the physical exercise using the trained machine-learning model. The processing circuitry is configured to output monitoring data indicative of at least the determined execution quality of the physical exercise.

A further example relates to a method for a local device for monitoring a user performing a physical exercise. The method comprises performing a radar measurement of the user performing the physical exercise using a radar sensor of the local device. The radar sensor outputs radar data indicative of the radar measurement. The method further comprises transmitting the radar data to a server running a trained machine-learning model for determining a type of the physical exercise and an execution quality of the physical exercise. In addition, the method comprises receiving, from the server, monitoring data indicative of at least the determined execution quality of the physical exercise.

### Brief description of the Figures

Some examples of apparatuses and/or methods will be described in the following by way of example only, and with reference to the accompanying figures, in which
Fig. 1 illustrates an example of a device for monitoring a user performing a physical exercise;
Fig. 2 illustrates an example of a distributed system for monitoring a user performing a physical exercise;
Fig. 3 illustrates temporal courses of exemplary physical quantities for a first physical exercise;
Fig. 4 illustrates temporal courses of exemplary physical quantities for a second physical exercise;
Fig. 5 illustrates temporal courses of exemplary physical quantities for a third physical exercise;
Fig. 6 illustrates a first exemplary data processing flowchart;
Fig. 7 illustrates a second exemplary data processing flowchart;
Fig. 8 illustrates situation in which the user is monitored using two radar sensors;
Fig. 9 illustrates a third exemplary data processing flowchart;
Fig. 10 illustrates a flowchart of an example of a method for monitoring a user performing a physical exercise;
Fig. 11 illustrates a flowchart of an example of a method for a local device for monitoring a user performing a physical exercise; and
Fig. 12 illustrates a flowchart of an example of a method for a server for monitoring a user performing a physical exercise.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

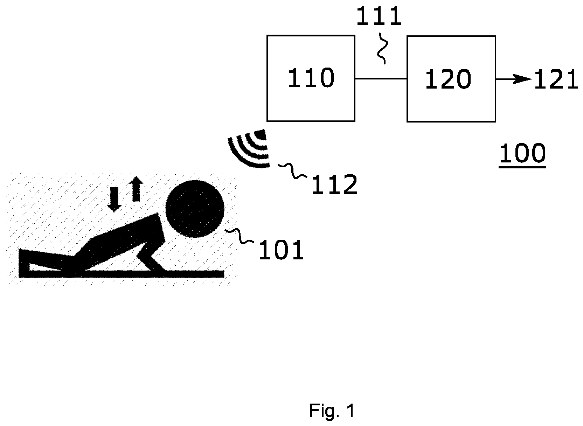

**Fig. 1** illustrates an exemplary device 100 for monitoring a user 101 performing a physical exercise. The physical exercise is a bodily activity for enhancing or maintaining a physical fitness or overall health and wellness of the user 101. In the example of Fig. 1, the user 101 performs pushups. However, the present disclosure is not limited thereto. In other examples, the user may perform other physical exercises such as lateral raises or curls.

The device 100 comprises a radar sensor 110 configured to perform a radar measurement of the user 101 performing the physical exercise. As indicated in Fig. 1, the radar sensor 110 emits radar waves 112 towards the user 101 while the user 101 is performing the physical exercise and measures reflections of the radar waves 112. The radar sensor 110 may use any radar technique for performing the radar measurement. For example, the radar sensor 110 may use Doppler radar techniques, pulsed radar techniques or Continuous Wave (CW) radar techniques such as Frequency Modulated Continuous Wave (FMCW) radar. The radar sensor 110 is configured to output radar data 111 indicative of the radar measurement.

Further, the device 100 comprises processing circuitry 120, which is coupled to the radar sensor 110. For example, the processing circuit 120 may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA). The processing circuit 120 may optionally be coupled to, e.g., read only memory (ROM) for storing software, random access memory (RAM) and/or non-volatile memory. The processing circuit 120 is configured to determine a type of the physical exercise based on the radar data 111 using a trained machine-learning model. In other words, the processing circuit 120 is configured to determine whether a physical exercise is performed by a user, and, if it is determined that a physical exercise is performed, to determine which physical exercise is performed by the user based on the radar data 111 using the trained machine-learning model. The processing circuitry 120 is additionally configured to determine an execution quality of the physical exercise based on the radar data 111 and the determined type of the physical exercise using the trained machine-learning model. For example, the processing circuit 120 may be configured to determine whether the physical exercise is performed correctly or incorrectly by the user based on the radar data 111 and the determined type of the physical exercise using the trained machine-learning model. In other examples, the processing circuit 120 may be configured to determine how well the user performs the physical exercise (e.g. similar to a grading system) based on the radar data 111 and the determined type of the physical exercise using the trained machine-learning model.

The machine-learning model is a data structure and/or set of rules representing a statistical model that the processing circuitry 120 uses to perform the above tasks without using explicit instructions, instead relying on models and inference. The data structure and/or set of rules represents learned knowledge (e.g. based on training performed by a machine-learning algorithm). For example, in machine-learning, instead of a rule-based transformation of data, a transformation of data may be used, that is inferred from an analysis of historical and/or training data. In the proposed technique, the content of radar data is analyzed using the machine-learning model (i.e. a data structure and/or set of rules representing the model).

The machine-learning model is trained by a machine-learning algorithm. The term "machine-learning algorithm" denotes a set of instructions that are used to create, train or use a machine-learning model. For the machine-learning model to analyze the content of radar data, the machine-learning model may be trained using training and/or historical radar data as input and training content information (e.g. labels indicating the type and/or the execution quality of the physical exercise) as output. By training the machine-learning model with a large set of training radar data and associated training content information (e.g. labels or annotations), the machine-learning model "learns" to recognize the content of the radar data, so the content of radar data that are not included in the training data can be recognized using the machine-learning model. By training the machine-learning model using training radar data and a desired output, the machine-learning model "learns" a transformation between the radar data and the output, which can be used to provide an output based on non-training radar data provided to the machine-learning model.

The machine-learning model may be trained using training input data (e.g. training radar data). For example, the machine-learning model may be trained using a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. For example, a training sample may comprise training radar data as input data and one or more labels as desired output data. The labels indicate the type of the physical exercise (e.g. pushups, curls, lateral raises) and/or the execution quality of the physical exercise (e.g. physical exercise executed correctly/incorrectly).

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input is classified to one of the limited set of values (type of exercise, execution quality). Similarity learning algorithms are similar to classification algorithms but are based on learning from examples using a similarity function that measures how similar or related two objects are.

Apart from supervised or semi-supervised learning, unsupervised learning may be used to train the machine-learning model. In unsupervised learning, (only) input data are supplied and an unsupervised learning algorithm is used to find structure in the input data such as training and/or historical radar data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. For example, unsupervised learning may be used to train the machine-learning model to detect whether a physical exercise is performed and/or to train the machine-learning model to detect the type of the physical exercise. The input data for the unsupervised learning may be training or historical radar data.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such that the cumulative reward is increased, leading to software agents that become better at the task they are given (as evidenced by increasing rewards). For example, reinforcement learning may be used to train the machine-learning model to determine the execution quality of the physical exercise.

Furthermore, additional techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, the machine-learning algorithm may use a decision tree as a predictive model. In other words, the machine-learning model may be based on a decision tree. In a decision tree, observations about an item (e.g. a set of input radar data) may be represented by the branches of the decision tree, and an output value corresponding to the item may be represented by the leaves of the decision tree. Decision trees support discrete values and continuous values as output values. If discrete values are used, the decision tree may be denoted a classification tree, if continuous values are used, the decision tree may be denoted a regression tree. For example, the machine-learning algorithm may use a decision tree for determining the type of the physical exercise.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may, e.g., be used to store, manipulate or apply the knowledge.

For example, the machine-learning model may be an Artificial Neural Network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values (e.g. the radar data), hidden nodes that are (only) connected to other nodes, and output nodes that provide output values (e.g. type and/or execution quality of the physical exercise). Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values (e.g. radar data) that belong to one of two categories (e.g. high execution quality and low execution quality of the physical exercise). The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection. In some examples, the machine-learning model may be a combination of the above examples.

The processing circuitry 120 is configured to output monitoring data 121 indicative of at least the determined execution quality of the physical exercise. Optionally, the monitoring data 121 may further indicate the determined type of the physical exercise.

The device 100 may comprise further hardware - conventional and/or custom.

By analyzing the radar data with the trained machine-learning model, the user may be monitored while performing the physical exercise. The monitoring data 121 may be used for assisting the user when performing the physical exercise (e.g. by generating a feedback or by adjusting an exercise equipment based on the monitoring data). For example, incorrect execution of the physical exercise may be determined immediately and the user be informed accordingly based on the monitoring data 121. Further, the apparatus 100 may allow to support physical rehabilitation of the user 101. For example, the apparatus 100 may enable a physiotherapist or a physician to check a motion sequence of the user 101 during the physical exercise in an automated manner. For example, after a surgery, the apparatus 100 may allow to check in an automated manner a motion sequence of the user during a physical exercise performed as part of a rehabilitation program. Similarly, the apparatus 100 may allow self-monitoring of motions for the user 101. The apparatus 100 may further allow to preserve a privacy of the user 101 as the user 101 cannot be identified from the radar data 111-contrary to systems based on, e.g., video cameras.

Further, the apparatus 100 may allow to monitor a healing process over longer periods of times by comparing radar measurements from different days using the trained machine-learning model. In other words, the processing circuitry 120 may further be configured to determine a progress in a healing process based on radar data from different radar measurements using the trained machine-learning model. In other examples, the apparatus 100 may allow to prevent cheating of the user 101 as it allows to detect whether the physical exercise was performed. Still further, the apparatus 100 may allow a health insurance to track physical activities of the user 101.

For example, the device 100 may be a mobile device such as a smartphone or a tablet-computer. In other examples, the device 100 may be an entertainment device such as a television, a game console or an equipment for one of them. In some examples, the device 100 may be part of an exercise system such that the device 100 further comprises or is included in an exercise equipment for use by the user 101 when performing the physical exercise.

The radar data 111 may be input directly into the trained machine-learning model. In other examples, the radar data may be pre-processed prior to being processed by the trained machine-learning model. For example, a Fourier transform (e.g. a Fast Fourier Transform, FFT) and/or a principal component analysis may be applied to the radar data as part of the pre-processing.

In the example of Fig. 1, the device 100 comprises a single radar sensor 110 generating the radar data 111 that are analyzed using the trained machine-learning model. However, the present technology is not limited thereto. In general, any number of radar sensors may be used for performing one or more radar measurements of the user 101 while performing the physical exercise. For example, the device 100 may optionally comprise at least one further radar sensor configured to perform a respective further radar measurement of the user 101 performing the physical exercise. The at least one further radar sensor outputs respective further radar data indicative of the respective further radar measurement. The radar sensor 110 and the at least one further radar sensor may be arranged at different positions and/or with different orientations relative to the user 101 to capture the user 101 from different point of views. The radar sensor 110 and the at least one further radar sensor may perform their respective radar measurement simultaneously.

The radar data output by the plurality of radar sensors may be fused prior to analysis by the trained machine-learning model. For example, the processing circuitry 120 may be further configured to fuse the radar data output 111 by the radar sensor 110 and the further radar data output by the at least one further radar sensor to combined radar data. For fusing the radar data of the plurality of radar sensors, the processing circuitry 120 may use known data fusion techniques. The radar data may be subject to pre-processing as described above or below - before and/or after the fusion of the radar data.

The processing circuitry 120 may be configured to determine the type of the physical exercise and/or the execution quality of the physical exercise as described above or below based on the combined radar data instead of only the radar data 111 of the radar sensor 110.

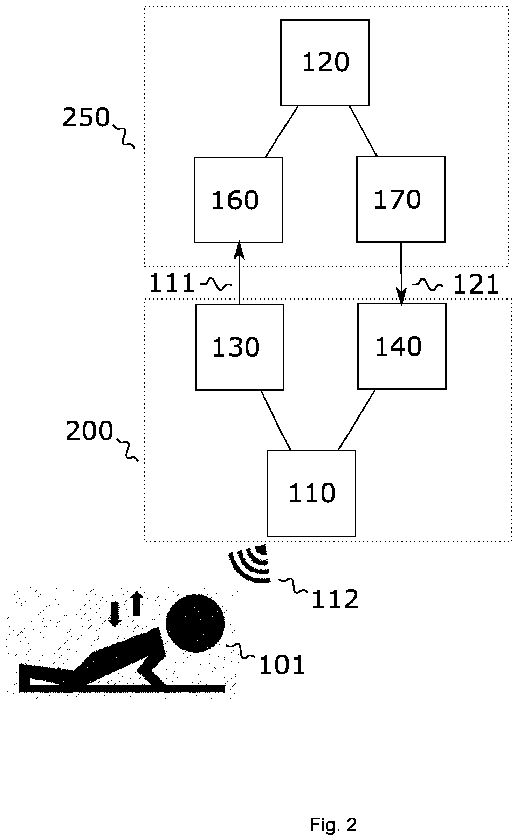

In the example of Fig. 1, an integrated device 100 is used for monitoring the user 101. Fig. 2 illustrates an alternative example with distributed functionalities. The distributed system illustrated in Fig. 2 comprises a local device 200 and a server 250.

The local device 200 comprises the radar sensor 110 described above. The radar sensor 110 is configured to perform the radar measurement of the user performing the physical exercise and output the radar data 111 indicative of the radar measurement. However, unlike in the example of Fig. 1, the radar data 111 are not analyzed by the local device 200. Instead, the radar data 111 are analyzed by the server 250.

The local device 200 comprises a transmitter 130 configured to transmit the radar data to the sever 250 located remote from the local device 200. Accordingly, the server 250 comprises a receiver 160 configured to receive the radar data 111 from the local device 200.

The server 250 comprises the processing circuitry 120 running the trained machine-learning model for determining the type of the physical exercise and the execution quality of the physical exercise based on the received radar data 111 (analogously to what is described above). The processing circuitry 120 outputs the monitoring data 121 indicative of at least the determined execution quality of the physical exercise.

The server 250 comprises a transmitter 170 configured to transmit the monitoring data 121 to the local device 200. Accordingly, the local device 200 comprises a receiver 140 configured to receive the monitoring data 121 from the server 250.

For example, the local device 200 and the server 250 may be coupled via the internet and/or one or more local networks. The transmitter 130 and the receiver 140 of the local device as well as the receiver 160 and the transmitter 170 of the server 250 may be configured for wired and/or wireless data exchange.

The local device 200 and the server 250 may comprise further hardware - conventional and/or custom.

In some examples, the local device 200 may be a mobile device such as a smartphone or a tablet-computer. In other examples, the local device 200 may be an entertainment device such as a television, a game console or an equipment for one of them. In some examples, the local device 200 may be part an exercise system such that the local device 200 further comprises or is included in an exercise equipment for use by the user 101 when performing the physical exercise.

Analogously to what is described above for the device 100, the distributed system may allow to monitor the user 101 while performing the physical exercise. Also the distributed system 200 may allow to preserve the privacy of the user 101. By outsourcing the analysis of the radar data 111 to the server 250, the local device 200 may require less computing power compared to the device 100. Accordingly, the local device 200 may be manufactured with lower complexity and lower costs compared to the device 100. Further, a power consumption of the local device 200 may be reduced compared to the device 100. Therefore, the distributed system of Fig. 2 may be advantageous when using, e.g., mobile devices with limited battery capacity as the local device 200.

The local device 200 may optionally comprise more than one radar sensor - analogously to what is described above for the device 100. The radar data of the plurality of radar sensors may be transmitted by the local device 100 to the server 250 and be fused at the server 250 by, e.g., the processing circuitry 120 of the server 250. Alternatively, the radar data of the plurality of radar sensors may be fused at the local device 200 by dedicated circuitry (not illustrated) and the combined radar data may be transmitted to the server 250 by the local device 200.

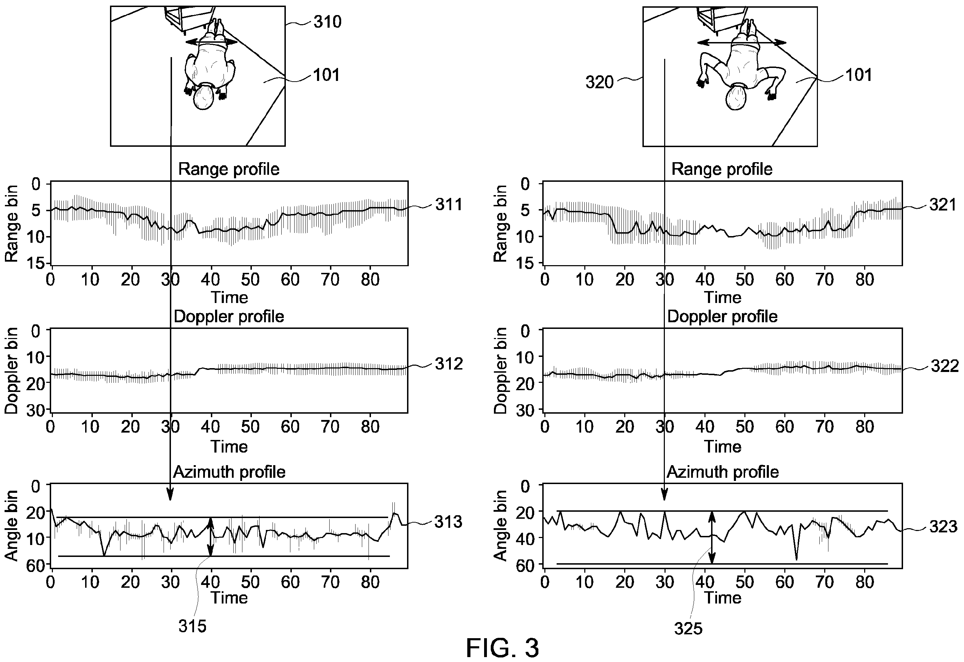

In the following, three examples of how to determine the type and the execution quality of a respective physical exercise will be explained with reference to Figs. 3 to 5. It is to be noted that the types of physical exercises described in the following examples are randomly selected in order to further illustrate the proposed technique. The proposed technique may as well be used for monitoring the user when performing other types of physical exercises. Similarly, it is to be noted that the physical quantities analyzed by the trained machine-learning model in the following examples are randomly selected in order to further illustrated the proposed technique. Also other or additional physical quantities encoded in or derivable from the radar data 111 may be analyzed according to the proposed technique.

**Fig. 3** illustrates in the upper left part a situation 310 in which the user 101 performs pushups correctly. In the situation 310, the user performs narrow pushups, i.e., the elbows of the user are positioned close to the upper body of the user 101. For comparison, Fig. 3 illustrates in the upper right another situation 320 in which the user 101 performs pushups incorrectly. In the situation 310, the user performs wide pushups, i.e., the elbows of the user are flapped to side such that the elbows are positioned far away from the upper body of the user 101.

In both situations 310 and 320, a radar measurement is performed while the user performs the pushups. The resulting radar data 111 of the radar sensor 110 are pre-processed (e.g. by the processing circuitry 120 illustrated Figs. 1 and 2) in order to determine a respective temporal course for several physical quantities. For the situation 310, three exemplary temporal courses 311, 312 and 313 are illustrated in the left part of Fig. 3. Analogously, three exemplary temporal courses 321, 322 and 323 are illustrated in the right part of Fig. 3 for the situation 320.

The temporal courses 311 and 321 indicate the temporal course of the measured distance of a body part (e.g. upper body, head or center of mass) of the user 101 to the radar sensor 110 during the respective radar measurement. The temporal courses 312 and 322 indicate the temporal course of the measured doppler shift during the respective radar measurement. The temporal courses 313 and 323 indicate the measured azimuth of the body part of the user 101 with respect to the radar sensor 110 during the respective radar measurement.

The temporal courses 311 and 312 are used by the trained machine-learning model for determining the type of the physical exercise in the situation 310. In other words, the trained machine-learning model recognizes from the temporal courses 311 and 312 that the user 101 performs pushups in the situation 310. Analogously, the trained machine-learning model recognizes from the temporal courses 321 and 322 that the user 101 performs pushups in the situation 320. The trained machine-learning model is able to recognize from these temporal courses that the user 101 performs pushups in the respective situation as the temporal course of the measured distance and the temporal course of the measured doppler shift are characteristic for pushups.

When the user 101 moves his upper body downwards during the pushup, the distance of the user 101 to the radar sensor 110 increases. The distance is maximum at the turning point of the pushup (i.e. when the user changes from moving his upper body downwards to moving his upper body upwards). After passing the turning point, the user 101 moves his upper body upwards such that the distance of the user 101 to the radar sensor 110 decreases. In the temporal course 311, the measured distance increases until approx. time step 35 and subsequently decreases. Similarly, the measured distance increases until approx. time step 45 and subsequently decreases in the temporal course 321.

Due to the inversion of the user 101's movement at the turning point of the pushup, the user 101's relative movement with respect to the radar sensor 110 is inversed at the turning point of the pushup. Therefore, the measured doppler shift during the respective radar measurement "jumps" (rapidly changes) at the turning point of the pushup. In the temporal course 312, the measured doppler shift jumps at approx. time step 35. Similarly, the measured doppler shift jumps at approx. time step 45 in the temporal course 322.

The trained machine-learning model "learned" these characteristics in the temporal courses during the training phase as described above. Therefore, the trained machine-learning model is able to determine that the user is performing pushups in the situations 310 and 320 from the characteristics of the temporal courses 311, 312, 321 and 322.

After determining that the user 101 is performing pushups, the trained machine-learning model is used to determine the execution quality of the pushups in the situations 310 and 320.

For narrow pushups, the range of measured values for the azimuth is narrow due to the narrow positioning of the user 101's elbows. On the other hand, the range of measured values for the azimuth is wide for wide pushups due to the wide positioning of the user 101's elbows. In other words, the range of measured azimuth values for wide pushups is spread compared to the range of measured azimuth values for narrow pushups. The trained machine-learning model "learned" this characteristic during the training phase as described above. This characteristic allows the trained machine-learning model to assess the execution quality of the pushups.

The range 315 of measured azimuth values in the temporal course 313 is narrow. Accordingly, the trained machine-learning model is able to determine that user 101 is performing narrow pushups in the situation 310 and, hence, performs the pushups correctly. Therefore, the trained machine-learning model outputs that the user 101 performs the pushups with a high execution quality in the situation 310.

The range 325 of measured azimuth values in the temporal course 323 is wide. Accordingly, the trained machine-learning model is able to determine that the user 101 is performing wide pushups in the situation 320 and, hence, performs the pushups incorrectly. Therefore, the trained machine-learning model outputs that the user 101 performs the pushups with a low execution quality in the situation 320.

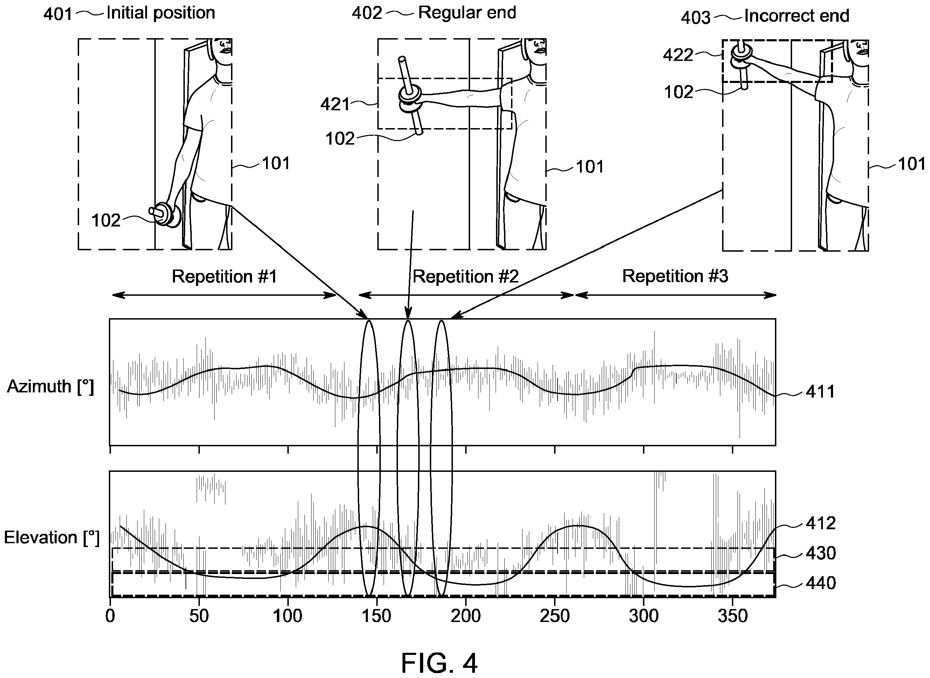

**Fig. 4** illustrates another example in which the user 101 performs lateral raises. Lateral raises allow to train shoulder muscles but pose a significant risk to shoulder injuries when done incorrectly.

In the initial position 401, the user 101 is holding a (e.g. metallic) dumbbell 102 in each hand. The arms point towards the floor. The user 101 starts to lift the metallic dumbbells 102 out to the side. In the correct (regular) end position 402, the arms of the user 101 are parallel with his shoulders as indicated by the marking 421. An incorrect end position 403 is reached in case the arms are further lifted such that the metallic dumbbells 102 are positioned above the user 101's shoulders. This indicated by the marking 422. After reaching the end position (either correct or incorrect), the user 101 lowers the metallic dumbbells 102 until he is back at the initial position 401.

A radar measurement is performed while the user performs the lateral raises. The radar data 111 of the radar measurement are pre-processed (e.g. by the processing circuitry 120 illustrated Figs. 1 and 2) in order to determine a respective temporal course for several physical quantities. Two exemplary courses are illustrated in Fig. 4.

The temporal course 411 indicates the measured azimuth of a body part (e.g. hand holding metallic dumbbell 102) of the user 101 with respect to the radar sensor 110 during the radar measurement. The temporal course 412 indicates the measured elevation of the body part of the user 101 with respect to the radar sensor 110 during the radar measurement. Each of the temporal courses 411 and 412 shows three repetitions of the physical exercise.

As the user 101 repeatedly (and ideally periodically) moves the dumbbells away from and back toward his upper body during the lateral raises, the measured azimuth oscillates as illustrated in the temporal course 411 and the measured elevation oscillates as illustrated in the temporal course 412. The oscillation of the azimuth and the elevation is characteristic for lateral raises. The trained machine-learning model "learned" these characteristics during the training phase as described above. Therefore, the trained machine-learning model is able to determine that the user 101 is performing lateral raises from the characteristics of the temporal courses 411 and 412.

After determining that the user 101 is performing lateral raises, the trained machine-learning model is used to determine the execution quality of the lateral raises. This is exemplarily illustrated for the second repetition in Fig. 4.

In case the user 101 performs the lateral raises correctly (as highlighted by marking 421), the maximum measured elevation is in a first value range 430. In case, the maximum measured elevation is within the first value range 430, the arms of the user 101 are parallel with his shoulders and, hence, in the correct end position 402. On the other hand, in case the user 101 performs the lateral raises incorrectly (as highlighted by marking 422), the maximum measured elevation is in the second value range 440. In case, the maximum measured elevation is within the second value range 440, the arms of the user 101 are above his shoulders and, hence, in the incorrect end position 403. The trained machine-learning model "learned" the first value range 430 and the second value range 440 during the training phase as described above.

In the example of Fig. 4, at approx. time step 150, the measured elevation for the second repetition is minimum as the user is in the initial position 401 for the second repetition. At approx. time step 170, the measured elevation for the second repetition is in the first value range 430 as the user 101's arms are parallel with his shoulders (position 402). However, as the user does not stop lifting the metallic dumbbells 102 once his arms are parallel with his shoulders, the measured elevation further increases and reaches the second value range 440 at approx. time step 190 for the second repetition. Accordingly, the trained machine-learning model is able to determine that the user 101 is lifting his arms above his shoulders and, hence, performs the lateral raises incorrectly. Therefore, the trained machine-learning model outputs that the user 101 performs the lateral raises with a low execution quality.

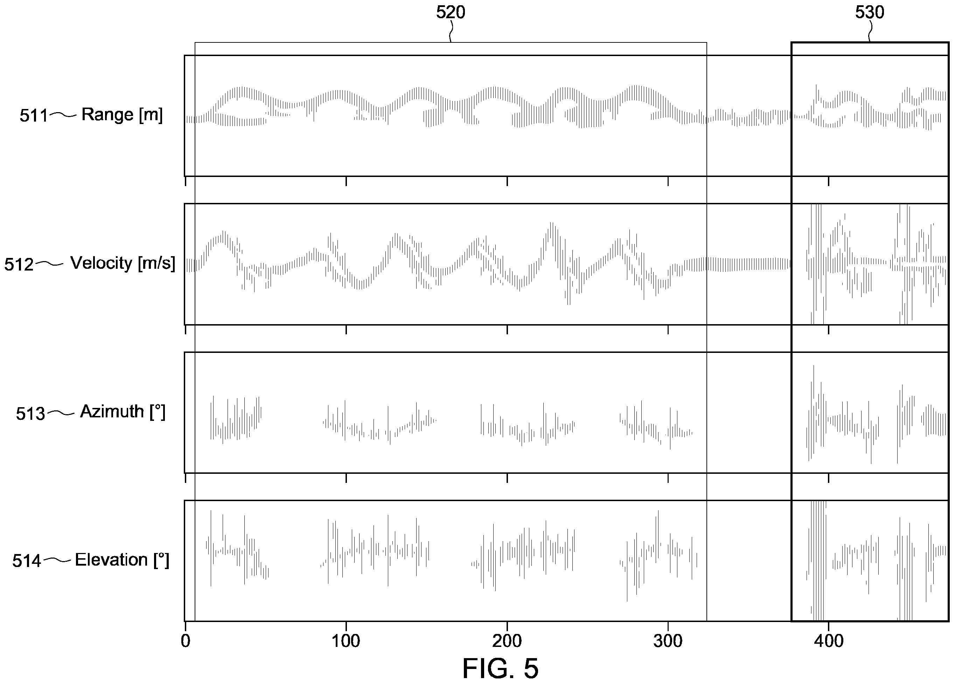

**Fig. 5** illustrates another example in which the user 101 performs curls. Curls allow to strengthen the biceps. While performing the curls, the user 101 is holding a dumbbell in each hand with his arms hanging by his sides. Then the user repeatedly curls the dumbbells up to shoulder level. For it to be most effective, the position of the body, shoulder, and elbow should be as fixed as possible. Common mistakes are using too much weight, wrong positioning of joints or uncontrolled execution of the exercise.

A radar measurement is performed while the user performs the curls. The radar data 111 of the radar measurement are pre-processed (e.g. by the processing circuitry 120 illustrated Figs. 1 and 2) in order to determine a respective temporal course for several physical quantities. Four exemplary courses are illustrated in Fig. 4.

The temporal course 511 indicates the temporal course of the measured distance of a body part (e.g. hand holding metallic dumbbell) of the user 101 to the radar sensor 110 during the respective radar measurement. The temporal courses 512 indicate the velocity of the body part with respect to the radar sensor 110 during the respective radar measurement. The temporal course 513 indicates the temporal course of the measured azimuth of the body part of the user 101 with respect to the radar sensor 110 during the respective radar measurement. The temporal course 514 indicates the temporal course of the measured elevation of the body part of the user 101 with respect to the radar sensor 110 during the respective radar measurement.

As the user 101 repeatedly (and ideally periodically) moves the dumbbells up and down during the curls, the measured range and velocity oscillates as illustrated in the temporal course 511 and 512. The trained machine-learning model "learned" this characteristic during the training phase as described above. Therefore, the trained machine-learning model is able to determine that the user 101 is performing curls from the characteristic of the temporal courses 511 and 512.

After determining that the user 101 is performing curls, the trained machine-learning model is used to determine the execution quality of the curls.

In case the user 101 performs the curls correctly, the temporal courses for range and velocity are harmonic. Further, azimuth and elevation do not alter much as the position of his joints is controlled by the user 101 when performing the curls correctly. The trained machine-learning model "learned" these characteristics during the training phase as described above. This characteristic allows the trained machine-learning model to assess the execution quality of the curls. In other words, the trained machine-learning model assesses the execution quality of the curls based on the smoothness of the temporal courses.

During a first time range 520 (from approx. time step 10 to approx. time step 320), the temporal courses 511 and 512 for distance and velocity are harmonic and the temporal courses 513 and 514 for azimuth and elevation do not alter much. Accordingly, the trained machine-learning model is able to determine that user 101 is performing the curls correctly during the first time range 520. Therefore, the trained machine-learning model outputs that the user 101 performs the curls with a high execution quality in the first time range 520.

During a second time range 530 (from approx. time step 380 to approx. time step 450), the temporal course 511 for the measured distance is not harmonic. Also the temporal course 512 for the measured velocity shows overshoots. Further, the temporal courses 513 and 514 for azimuth and elevation are smeared. Accordingly, the trained machine-learning model is able to determine that user 101 is performing the curls incorrectly during the second time range 530 (e.g. because the user 101 uses too much weight). Therefore, the trained machine-learning model outputs that the user 101 performs the curls with a low execution quality in the second time range 530.

As described above with respect to examples of Figs. 3 to 5, the proposed technique may comprise pre-processing the radar data 101 in order to determine a respective temporal course for one or more physical quantities. The one or more physical quantities may, e.g., comprise one or more of the following: a distance of a body part of the user 101 to the radar sensor 101 during the radar measurement, a doppler shift during the radar measurement, an azimuth of the body part of the user 101 with respect to the radar sensor 110 during the radar measurement, and an elevation of the body part of the user 101 with respect to the radar sensor 110 during the radar measurement.

As described above with respect to examples of Figs. 3 to 5, determining the type of the physical exercise based on the radar data 110 may comprise determining the type of the physical exercise based on the respective temporal course for at least one of the one or more physical quantities using the trained machine-learning model. Similarly, determining the execution quality of the physical exercise based on the radar data 110 may comprise determining the execution quality of the physical exercise based on the respective temporal course for at least one of the one or more physical quantities using the trained machine-learning model.

It is to be noted that the proposed technique is not limited to determining a respective temporal course for one or more physical quantities. In general, the radar data 101 may be pre-processed (e.g. by the processing circuit 110) in order to determine any type of spatial information, velocity information and/or temporal information that is encoded in or derivable from the radar data 111. Accordingly, the spatial information, velocity information and/or temporal information or at least pieces thereof may be analyzed by the trained machine-learning model for determining the type and/or the execution quality of the physical exercise.

As described above with respect to examples of Figs. 3 to 5, the trained machine-learning model "learned" one or more patterns that are characteristic for the respective type of physical exercise. By comparing the (e.g. pre-processed) radar data with the one or more learned patterns for the respective type of physical exercise, the trained machine-learning model is able to determine the type of the physical exercise based on the radar data. Similarly, the trained machine-learning model "learned" one or more patterns that are characteristic for different execution qualities of a specific type of physical exercise. By comparing the (e.g. pre-processed) radar data with the one or more learned patterns for the different execution qualities of the specific physical exercise, the trained machine-learning model is able to determine the execution quality of the determined physical exercise based on the radar data.

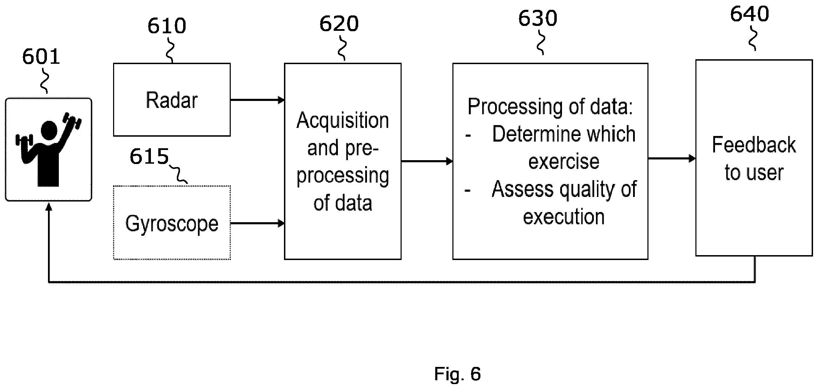

**Fig. 6** illustrates a first exemplary data processing flow according to the proposed technique. Similar to what is described above, a user 601 performs a physical exercise. A radar measurement 610 of the user 601 is performed using a radar sensor while the user 601 is performing the physical exercise. The radar sensor outputs radar data indicative of the radar measurement. The radar data are acquired from the radar sensor and a pre-processing 620 as described above is performed on the acquired radar data. For example, the processing circuit 120 in the examples of Figs. 1 and 2 may perform the pre-processing 620. In alternative examples, the local device 200 in the example of Fig. 2 may comprise a dedicated processing circuit (not illustrated) for performing the pre-processing 620.

After the pre-processing 620, the pre-processed radar data are input to processing 630 by the trained machine-learning model as described above in order to determine the type of the physical exercise (i.e. which physical exercise is performed by the user 601) and the execution quality of the physical exercise (e.g. whether the physical exercise is performed correctly by the user 601). For example, the processing circuit 120 in the examples of Figs. 1 and 2 may perform the processing 630. In other words, the processing 630 may be done locally or on a server.

The monitoring data provided by the machine-learning model are used for feedbacking 640. For example, a visual and/or acoustic feedback for the user may be generated based on the monitoring data. For example, the visual and/or acoustic feedback may indicate that the user 601 is performing the physical exercise correctly or incorrectly. In other examples, the visual and/or acoustic feedback may additionally or alternatively indicate one or more tips for the user for improving the execution of the physical exercise. For example, the processing circuit 120 in the examples of Fig. 1 and Fig. 2 may perform the generation of the visual and/or acoustic feedback. Similarly, the local device 200 in the example of Fig. 2 may comprise a dedicated processing circuit (not illustrated) for generating the visual and/or acoustic feedback based on the received monitoring data.

As indicated in Fig. 6, the feedbacking 640 further includes outputting the visual and/or acoustic feedback to the user. For example, the visual and/or acoustic feedback may be output by a loudspeaker and/or a display of or coupled to the device including the radar sensor (e.g. the device 100 or the local device 200 described above).

In case the radar sensor performing the radar measurement 610 is included in a mobile device (e.g. a smartphone or a tablet-computer), an orientation measurement 615 may be performed using a gyroscope of the mobile device for determining an orientation of the radar sensor. The gyroscope outputs orientation data indicative of the orientation of the radar sensor which may be used by the trained machine-learning model. For example, at least one of the type of the physical exercise and the execution quality of the physical exercise may be determined by the trained machine-learning model further based on the orientation data. The orientation data may allow to correct the radar data for effects origination from the orientation of the radar sensor. Similarly to what is described above for the radar data, also the orientation data may be pre-processed.

In the example of Fig. 6, the user 601 may be monitored and assisted while performing the physical exercise. Further, the privacy of the user 601 may be preserved as the user 601 cannot be identified from the radar data. For example, a contactless training monitoring may be provided according to the example of Fig. 6 (e.g. monitoring of movement, muscular tremor, heartbeat rate, etc.).

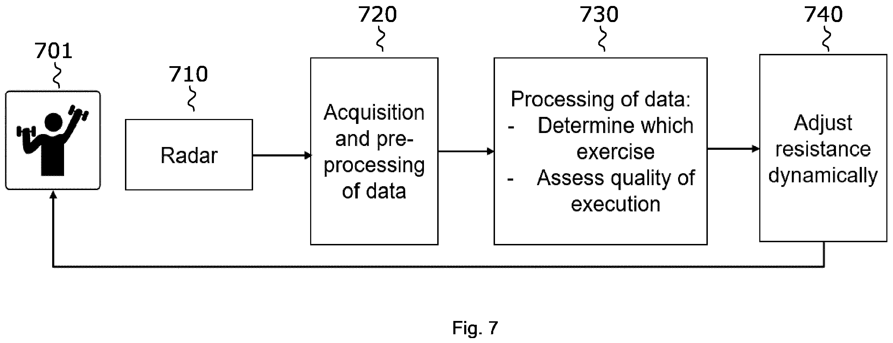

**Fig. 7** illustrates a second exemplary data processing flow according to the proposed technique. In the example of Fig. 7, the user 701 performs the physical exercise using an adjustable exercise equipment. The adjustable exercise equipment is any apparatus or device to be used by the user 701 for performing the physical exercise and presenting an adjustable amount of resistance to the user 701 when performing the physical exercise. For example, the adjustable exercise equipment may be a leg press, a latissimus pulling device or a rowing machine.

A radar measurement 710 of the user 701 is performed using a radar sensor while the user 701 is performing the physical exercise using the adjustable exercise equipment. The radar sensor outputs radar data indicative of the radar measurement. The radar data are acquired from the radar sensor and a pre-processing 720 as described above is performed on the acquired radar data. For example, the processing circuit 120 in the example of Fig. 1 may perform the pre-processing 720.

After the pre-processing 720, the pre-processed radar data are input to processing 730 by the trained machine-learning model as described above in order to determine the type of the physical exercise (i.e. which physical exercise is performed by the user 701) and the execution quality of the physical exercise (e.g. whether the physical exercise is performed correctly by the user 701). For example, the processing circuit 120 in the example of Fig. 1 may perform the processing 730.

The monitoring data provided by the machine-learning model are used for (e.g. dynamically) adjusting 740 the exercise equipment. For example, the proposed technique may comprise adjusting at least one adjustable parameter of the exercise equipment based on the monitoring data. The at least one adjustable parameter of the exercise equipment may, e.g., be a weight used by the exercise equipment for generating a resistance presented by the exercise equipment to the user 701 when performing the physical exercise, a motor generated resistance presented by the exercise equipment to the user 701 when performing the physical exercise, a position and/or an orientation of an element of the exercise equipment for interacting with the user 701. The at least one adjustable parameter of the exercise equipment may allow to adjust the effective resistance presented by the exercise equipment to the user 701 when performing the physical exercise.

According to examples, adjusting the at least one parameter of the exercise equipment may comprise determining, based on the monitoring data, a target value for the resistance presented by the exercise equipment to the user 701 when performing the physical exercise. For example, if the monitoring data indicate that the execution quality is low, the target resistance may be decreased in order to allow the user 701 to perform the physical exercise correctly with reduced resistance. Similarly, if the monitoring data indicate that the execution quality is high, the target resistance may be increased in order to challenge the user 701 more when performing the physical exercise.

Adjusting 740 the exercise equipment may further comprise controlling the exercise equipment to dynamically adjust the resistance presented by the exercise equipment to the user 701 when performing the physical exercise to the target value. Accordingly, the physical exercise may be adapted to the monitored status of the user 701 on-the-fly.

By analyzing the execution quality of physical exercise and adjusting the resistance according, the user 701 may be enabled to always train with the maximum possible resistance. Accordingly, the user 701 may go into stronger metabolic stress and train until muscular failure with significantly reduced risk of injuries. In other words, a more effective training may be provided.

Similarly to what is described above with respect to Fig. 6, a visual and/or acoustic feedback for the user may additionally be determined in the example of Fig. 7 based on the monitoring data. The visual and/or acoustic feedback to the user may be output to the user for assisting the training. For example, the visual and/or acoustic feedback may be output by a loudspeaker and/or a display of or coupled to the device including the radar sensor (e.g. the device 100 described above). The visual and/or acoustic feedback may indicate that the user 701 is performing the physical exercise correctly or incorrectly. Additionally or alternatively, the visual and/or acoustic feedback may indicate that a parameter of the of the exercise equipment (e.g. a resistance presented to the user 701) was/is/will be adjusted based on the monitoring data.

It is to be noted that a device comprising the radar sensor and the processing circuitry for performing one or more of the method steps described above with reference to Fig. 7 may comprise or be included in the exercise equipment. In other examples, a server may comprise the processing circuitry for determining the type and/or the execution quality of the physical exercise of the physical exercise according using the trained machine-learning model, whereas a local device comprising the radar sensor and communication circuitry (e.g. a transmitter and/or a receiver) may comprise or be included in the exercise equipment.

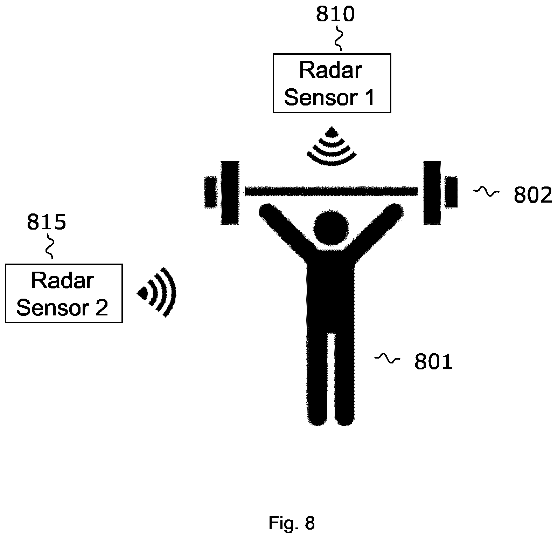

**Fig. 8** illustrates a situation in which a user 801 performing a physical exercise is monitored using two radar sensors 810 and 815. The two radar sensors 810 and 815 simultaneously perform their respective radar measurement. It is to be noted that the number of radar sensors illustrated in Fig. 8 is merely exemplary. Similarly to what is described above, any number of radar sensors may be used for monitoring the user 801. The first radar sensor 810 is arranged above the user 801 to provide a top view of the user 801 while performing the physical exercise. The second radar sensor 815 is arranged at a side of the user 801 to provide side view of the user 801 while performing the physical exercise.

In the example of Fig. 8, the user 801 lifts a weight 802 during the physical exercise. For example, the radar data of the first radar sensor 810 may allow the trained machine-learning model to determine, as part of the assessment of the physical exercise's execution quality, whether the user 801 lifts the weight 802 in a straight line. Similarly, the radar data of the second radar sensor 820 may allow the trained machine-learning model to determine, as part of the assessment of the physical exercise's execution quality, whether a posture of the user 802 is correct and/or whether the user 801 performs any rotations.

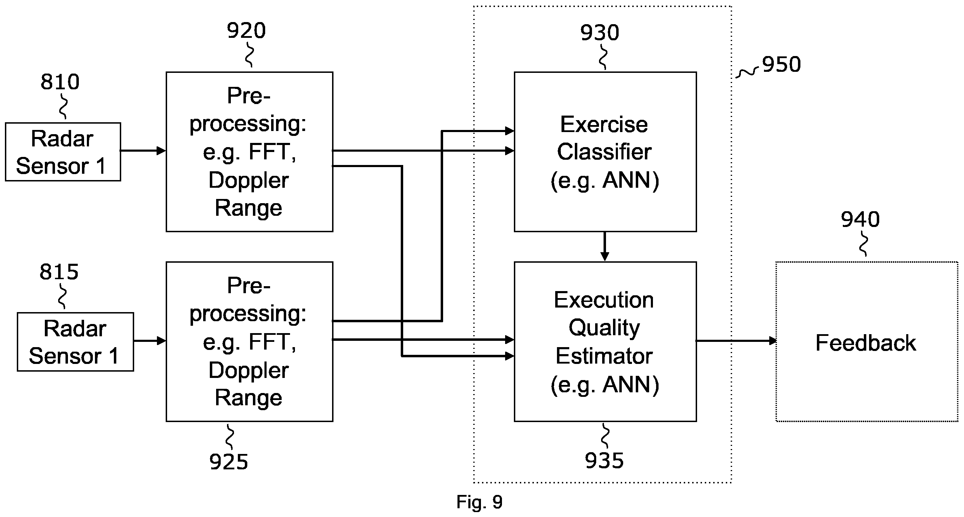

**Fig. 9** illustrates an exemplary data processing flow according to the proposed technique for the situation illustrated in Fig. 8.

A respective radar measurement of the user 801 is simultaneously performed by each of the radar sensors 810 and 815 while the user 801 is performing the physical exercise. The radar sensors output respective radar data indicative of the respective radar measurement. The radar data are acquired from the radar sensors and a respective pre-processing 920, 925 as described above is performed on the acquired radar data. For example, the processing circuit 120 in the example of Fig. 1 may perform the respective pre-processing 920, 925.

After the pre-processing 920, 925, the pre-processed radar data are input to processing 950 by the trained machine-learning model as described above in order to determine the type of the physical exercise (i.e. which physical exercise is performed by the user 801) and the execution quality of the physical exercise (e.g. whether the physical exercise is performed correctly by the user 801). The trained machine-learning model uses a first classifier 930 (e.g. an ANN) for determining the type of the physical exercise and a separate second classifier 935 (e.g. an ANN) for determining the execution quality of the physical exercise. The pre-processed radar data may further be fused prior to inputting it to the first classifier 930 and/or the second classifier 935. For example, the processing circuit 120 in the examples of Figs. 1 and 2 may perform the processing 950. In other words, the processing 950 may be done locally or on a server.

The monitoring data provided by the machine-learning model may, e.g., be used for feedbacking 940 as indicated in Fig. 9. For example, a visual and/or acoustic feedback for the user may be generated based on the monitoring data. For example, the visual and/or acoustic feedback may indicate that the user 801 is performing the physical exercise correctly or incorrectly. In other examples, the visual and/or acoustic feedback may additionally or alternatively indicate one or more tips for the user for improving the execution of the physical exercise. For example, the processing circuit 120 in the examples of Fig. 1 and Fig. 2 may perform the generation of the visual and/or acoustic feedback. Similarly, the local device 200 in the example of Fig. 2 may comprise a dedicated processing circuit (not illustrated) for generating the visual and/or acoustic feedback based on the received monitoring data.

In the example of Figs. 8 and 9, the user 801 may be monitored and assisted while performing the physical exercise. Further, the privacy of the user 801 may be preserved as the user 801 cannot be identified from the radar data. For example, a contactless training monitoring may be provided according to the example of Figs. 8 and 9.

Similarly to what is described in connection with Fig. 7, radar data of a plurality of radar sensors may be analyzed using a trained machine-learning model for adjusting at least one parameter of an exercise equipment to be used by a user when performing a physical exercise.

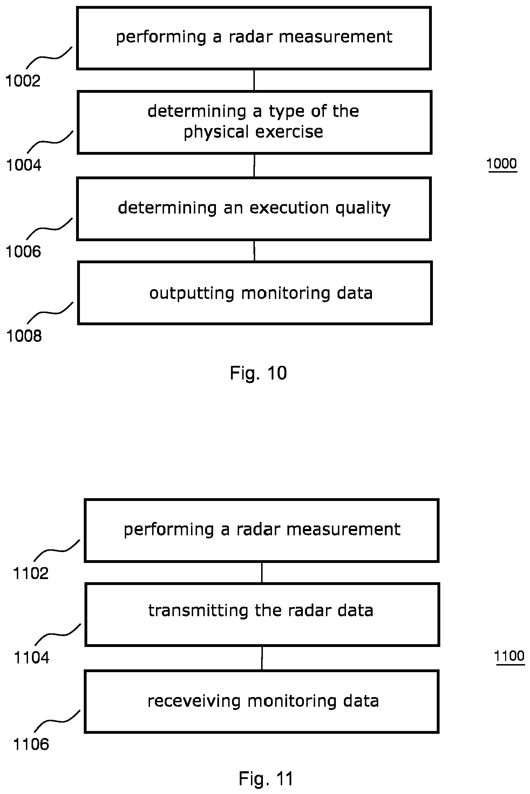

For further illustrating the user monitoring described above, **Fig. 10** illustrates a flowchart of a method 1000 for monitoring a user performing a physical exercise. The method 1000 comprises performing 1002 a radar measurement of the user performing the physical exercise using a radar sensor. The radar sensor outputs radar data indicative of the radar measurement. Further, the method 1000 comprises determining 1004 a type of the physical exercise based on the radar data using a trained machine-learning model. In addition, the method 1000 comprises determining 1006 an execution quality of the physical exercise based on the radar data and the determined type of the physical exercise using the trained machine-learning model. The method 1000 comprises outputting 1008 monitoring data indicative of at least the determined execution quality of the physical exercise.

The method 1000 may allow to monitor the user while performing the physical exercise. Further, the method 1000 may allow to determine the execution quality. The monitoring data indicative of at least the determined execution quality of the physical exercise may be used for assisting the user when performing the physical exercise (e.g. by generating a feedback or by adjusting an exercise equipment based on the monitoring data). Using radar data for the user monitoring may further allow to preserve a privacy of the user as the user cannot be identified from the radar data.

More details and aspects of the method 1000 are explained in connection with the proposed technique or one or more examples described above (e.g. Figs. 1 and 3 to 9). The method 1000 may comprise one or more additional optional features corresponding to one or more aspects of the proposed technique or one or more examples described above.

For further illustrating the distributed user monitoring described above, **Fig. 11** illustrates a flowchart of a method 1100 for a local device for monitoring a user performing a physical exercise. The method 1100 comprises performing 1102 a radar measurement of the user performing the physical exercise using a radar sensor of the local device. The radar sensor outputs radar data indicative of the radar measurement. The method 1100 further comprises transmitting 1104 the radar data to a server running a trained machine-learning model for determining a type of the physical exercise and an execution quality of the physical exercise. In addition, the method 1100 comprises receiving 1106, from the server, monitoring data indicative of at least the determined execution quality of the physical exercise.

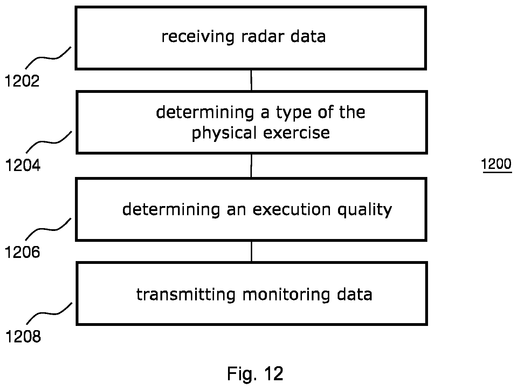

Further, **Fig. 12** illustrates a corresponding method 1200 for a server for monitoring a user performing a physical exercise. The method 1200 comprises receiving 1202 radar data from a local device. The radar data are indicative of a radar measurement of the user performing the physical exercise by a radar sensor of the local device. The method 1200 further comprises determining 1204 a type of the physical exercise based on the radar data using a trained machine-learning model. In addition, the method 1200 comprises determining 1206 an execution quality of the physical exercise based on the radar data and the determined type of the physical exercise using the trained machine-learning model. The method 1200 comprises transmitting 1208 monitoring data indicative of at least the determined execution quality of the physical exercise to the local device.

Similar to what is described above for the method 1000, the methods 1100 and 1200 may allow to monitor the user while performing the physical exercise in a distributed manner.

Further, the methods 1100 and 1200 may allow to outsource the identification and the assessment of the physical exercise to the server such that the local device need not be provided with significant computation capabilities.

More details and aspects of the methods 1100 and 1200 are explained in connection with the proposed technique or one or more examples described above (e.g. Figs. 2 to 9). The methods 1100 and 1200 may comprise one or more additional optional features corresponding to one or more aspects of the proposed technique or one or more examples described above.

The examples as described herein may be summarized as follows:
Some examples relate to a method for monitoring a user performing a physical exercise. The method comprises performing a radar measurement of the user performing the physical exercise using a radar sensor. The radar sensor outputs radar data indicative of the radar measurement. Further, the method comprises determining a type of the physical exercise based on the radar data using a trained machine-learning model. In addition, the method comprises determining an execution quality of the physical exercise based on the radar data and the determined type of the physical exercise using the trained machine-learning model. The method comprises outputting monitoring data indicative of at least the determined execution quality of the physical exercise.

In some examples, the method further comprises pre-processing the radar data in order to determine a respective temporal course for one or more physical quantities, wherein determining the type of the physical exercise based on the radar data comprises determining the type of the physical exercise based on the respective temporal course for at least one of the one or more physical quantities using the trained machine-learning model, and wherein determining the execution quality of the physical exercise based on the radar data comprises determining the execution quality of the physical exercise based on the respective temporal course for at least one of the one or more physical quantities using the trained machine-learning model.

According to some examples, the one or more physical quantities comprise at least one of a distance of a body part of the user to the radar sensor during the radar measurement, a doppler shift during the radar measurement, an azimuth of the body part of the user with respect to the radar sensor during the radar measurement, and an elevation of the body part of the user with respect to the radar sensor during the radar measurement.

In some examples, the user performs the physical exercise using an adjustable exercise equipment, wherein the method further comprises adjusting at least one parameter of the exercise equipment based on the monitoring data.

According to some examples, adjusting the at least one parameter of the exercise equipment comprises: determining a target value for a resistance presented by the exercise equipment to the user when performing the physical exercise; and controlling the exercise equipment to dynamically adjust the resistance presented by the exercise equipment to the user when performing the physical exercise to the target value.

In alternative examples, the radar sensor is included in a mobile device, wherein the method further comprises determining an orientation of the radar sensor using a gyroscope of the mobile device, wherein the gyroscope outputs orientation data indicative of the orientation of the radar sensor, and wherein at least one of the type of the physical exercise and the execution quality of the physical exercise is determined by the trained machine-learning model further based on the orientation data.

According to some examples, the method further comprises: performing at least one further radar measurement of the user performing the physical exercise using at least one further radar sensor, wherein the at least one further radar sensor outputs respective further radar data indicative of the respective further radar measurement; and fusing the radar data output by the radar sensor and the further radar data output by the at least one further radar sensor to combined radar data, wherein the type of the physical exercise and the execution quality of the physical exercise are determined based on the combined radar data.

In some examples, the method further comprises: determining a visual and/or acoustic feedback for the user based on the monitoring data; and outputting the visual and/or acoustic feedback to the user.

Other examples relate to a device for monitoring a user performing a physical exercise. The device comprises a radar sensor configured to perform a radar measurement of the user performing the physical exercise and output radar data indicative of the radar measurement. Further, the device comprises processing circuitry configured to determine a type of the physical exercise based on the radar data using a trained machine-learning model. The processing circuitry is additionally configured to determine an execution quality of the physical exercise based on the radar data and the determined type of the physical exercise using the trained machine-learning model. The processing circuitry is configured to output monitoring data indicative of at least the determined execution quality of the physical exercise.

According to some examples, the device further comprises an exercise equipment for use by the user when performing the physical exercise, wherein the processing circuitry is further configured to adjust at least one parameter of the exercise equipment based on the monitoring data.

In some examples, the processing circuitry is further configured to: determine, based on the monitoring data, a target value for a resistance presented by the exercise equipment to the user when performing the physical exercise; and control the exercise equipment to dynamically adjust the resistance presented by the exercise equipment to the user when performing the physical exercise to the target value.

In alternative examples, the device is a mobile device, wherein the device further comprises a gyroscope configured to determine an orientation of the radar sensor and output orientation data indicative of the orientation of the radar sensor, and wherein the processing circuitry is further configured to determine at least one of the type of the physical exercise and the execution quality of the physical exercise further based on the orientation data using the trained machine-learning model.

According to some examples, the device further comprises at least one further radar sensor configured to perform a respective further radar measurement of the user performing the physical exercise and output respective further radar data indicative of the respective further radar measurement, wherein the processing circuitry is further configured to fuse the radar data output by the radar sensor and the further radar data output by the at least one further radar sensor to combined radar data, and wherein the processing circuitry is further configured to determine the type of the physical exercise and the execution quality of the physical exercise based on the combined radar data.

Further examples relate to a method for a local device for monitoring a user performing a physical exercise. The method comprises performing a radar measurement of the user performing the physical exercise using a radar sensor of the local device. The radar sensor outputs radar data indicative of the radar measurement. The method further comprises transmitting the radar data to a server running a trained machine-learning model for determining a type of the physical exercise and an execution quality of the physical exercise. In addition, the method comprises receiving, from the server, monitoring data indicative of at least the determined execution quality of the physical exercise.

According to some examples, the method further comprises: determining a visual and/or acoustic feedback for the user based on the received monitoring data; and outputting the visual and/or acoustic feedback to the user.

In some examples the local device is a mobile device, wherein the method further comprises: determining an orientation of the radar sensor using a gyroscope of the local device, wherein the gyroscope outputs orientation data indicative of the orientation of the radar sensor; and transmitting the orientation data to the server in order to enable the trained machine-learning model to determine at least one of the type of the physical exercise and the execution quality of the physical exercise further based on the orientation data.

According to some examples, the method further comprises: performing at least one further radar measurement of the user performing the physical exercise using at least one further radar sensor, wherein the at least one further radar sensor outputs respective further radar data indicative of the respective further radar measurement; and transmitting the further radar data to the server running the trained machine-learning model for determining the type of the physical exercise and the execution quality of the physical exercise.

Still further examples relate to a local device for monitoring a user performing a physical exercise. The local device comprises a radar sensor configured to perform a radar measurement of the user performing the physical exercise and output radar data indicative of the radar measurement. Further, the local device comprises a transmitter configured to transmit the radar data to a server running a trained machine-learning model for determining a type of the physical exercise and an execution quality of the physical exercise. In addition, the local device comprises a receiver configured to receive, from the server, monitoring data indicative of at least the determined execution quality of the physical exercise.

According to some examples, the local device further comprises at least one further radar sensor configured to perform a respective further radar measurement of the user performing the physical exercise and output respective further radar data indicative of the respective further radar measurement, wherein the transmitter is further configured to transmit the further radar data to the server running the trained machine-learning model for determining the type of the physical exercise and the execution quality of the physical exercise.

Other examples relate to a method for a server for monitoring a user performing a physical exercise. The method comprises receiving radar data from a local device. The radar data are indicative of a radar measurement of the user performing the physical exercise by a radar sensor of the local device. The method further comprises determining a type of the physical exercise based on the radar data using a trained machine-learning model. In addition, the method comprises determining an execution quality of the physical exercise based on the radar data and the determined type of the physical exercise using the trained machine-learning model. The method comprises transmitting monitoring data indicative of at least the determined execution quality of the physical exercise to the local device.

In some examples, the method further comprises: receiving further radar data from the local device, wherein the further radar data are indicative of at least one further radar measurement of the user performing the physical exercise by at least one further radar sensor; fusing the radar data and the further radar data to combined radar data, wherein the type of the physical exercise and the execution quality of the physical exercise are determined based on the combined radar data.

Still other examples relate to a server for monitoring a user performing a physical exercise. The server comprises a receiver configured to receive radar data from a local device, wherein the radar data are indicative of a radar measurement of the user performing the physical exercise by a radar sensor of the local device. In addition, the server comprises processing circuitry configured to determine a type of the physical exercise based on the radar data using a trained machine-learning model. The processing circuitry is further configured to determine an execution quality of the physical exercise based on the radar data and the determined type of the physical exercise using the trained machine-learning model. The additionally comprises a transmitter configured to transmit monitoring data indicative of at least the determined execution quality of the physical exercise to the local device.

According to some examples, the receiver is further configured to receive further radar data from the local device, wherein the further radar data are indicative of at least one further radar measurement of the user performing the physical exercise by at least one further radar sensor, wherein the processing circuitry is further configured to fuse the radar data and the further radar data to combined radar data, and wherein the processing circuitry is further configured to determine the type of the physical exercise and the execution quality of the physical exercise based on the combined radar data.

Examples of the present disclosure may enable improved monitoring of a user performing a physical exercise.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (1000) for monitoring a user performing a physical exercise, the method comprising:
performing (1002) a radar measurement of the user performing the physical exercise using a radar sensor, wherein the radar sensor outputs radar data indicative of the radar measurement;
determining (1004) a type of the physical exercise based on the radar data using a trained machine-learning model;
determining (1006) an execution quality of the physical exercise based on the radar data and the determined type of the physical exercise using the trained machine-learning model; and
outputting (1008) monitoring data indicative of at least the determined execution quality of the physical exercise.

2. The method of claim 1, further comprising:
pre-processing the radar data in order to determine a respective temporal course for one or more physical quantities,
wherein determining (1004) the type of the physical exercise based on the radar data comprises determining the type of the physical exercise based on the respective temporal course for at least one of the one or more physical quantities using the trained machine-learning model, and
wherein determining (1006) the execution quality of the physical exercise based on the radar data comprises determining the execution quality of the physical exercise based on the respective temporal course for at least one of the one or more physical quantities using the trained machine-learning model.

3. The method of claim 2, wherein the one or more physical quantities comprise at least one of a distance of a body part of the user to the radar sensor during the radar measurement, a doppler shift during the radar measurement, a velocity of the body part of the user with respect to the radar sensor during the radar measurement, an azimuth of the body part of the user with respect to the radar sensor during the radar measurement, and an elevation of the body part of the user with respect to the radar sensor during the radar measurement.

4. The method of any one of claims 1 to 3, wherein the user performs the physical exercise using an adjustable exercise equipment, and wherein the method further comprises:
adjusting at least one parameter of the exercise equipment based on the monitoring data.

5. The method of claim 4, wherein adjusting the at least one parameter of the exercise equipment comprises:
determining a target value for a resistance presented by the exercise equipment to the user when performing the physical exercise; and
controlling the exercise equipment to dynamically adjust the resistance presented by the exercise equipment to the user when performing the physical exercise to the target value.

6. The method of any one of claims 1 to 3, wherein the radar sensor is included in a mobile device, and wherein the method further comprises:
determining an orientation of the radar sensor using a gyroscope of the mobile device, wherein the gyroscope outputs orientation data indicative of the orientation of the radar sensor,
wherein at least one of the type of the physical exercise and the execution quality of the physical exercise is determined by the trained machine-learning model further based on the orientation data.

7. The method of any one of claims 1 to 5, further comprising:
performing at least one further radar measurement of the user performing the physical exercise using at least one further radar sensor, wherein the at least one further radar sensor outputs respective further radar data indicative of the respective further radar measurement; and
fusing the radar data output by the radar sensor and the further radar data output by the at least one further radar sensor to combined radar data,
wherein the type of the physical exercise and the execution quality of the physical exercise are determined based on the combined radar data.

8. The method of any one of claims 1 to 7, further comprising:
determining a visual and/or acoustic feedback for the user based on the monitoring data; and
outputting the visual and/or acoustic feedback to the user.

9. A device (100) for monitoring a user performing a physical exercise, the device comprising:
a radar sensor (110) configured to perform a radar measurement of the user performing the physical exercise and output radar data (111) indicative of the radar measurement; and
processing circuitry (120) configured to:
determine a type of the physical exercise based on the radar data (111) using a trained machine-learning model;
determine an execution quality of the physical exercise based on the radar data (111) and the determined type of the physical exercise using the trained machine-learning model; and
output monitoring data (121) indicative of at least the determined execution quality of the physical exercise.

10. The device of claim 9, wherein the device further comprises an exercise equipment for use by the user when performing the physical exercise, and wherein the processing circuitry is further configured to:
adjust at least one parameter of the exercise equipment based on the monitoring data (121).

11. The device of claim 10, wherein the processing circuitry is further configured to:
determine, based on the monitoring data (121), a target value for a resistance presented by the exercise equipment to the user when performing the physical exercise; and
control the exercise equipment to dynamically adjust the resistance presented by the exercise equipment to the user when performing the physical exercise to the target value.

12. The device of claim 9, wherein the device is a mobile device, and wherein the device further comprises:
a gyroscope configured to determine an orientation of the radar sensor (110) and output orientation data indicative of the orientation of the radar sensor (110),
wherein the processing circuitry (120) is further configured to determine at least one of the type of the physical exercise and the execution quality of the physical exercise further based on the orientation data using the trained machine-learning model.

13. A method (1100) for a local device for monitoring a user performing a physical exercise, the method comprising:
performing (1102) a radar measurement of the user performing the physical exercise using a radar sensor of the local device, wherein the radar sensor outputs radar data indicative of the radar measurement;
transmitting (1104) the radar data to a server running a trained machine-learning model for determining a type of the physical exercise and an execution quality of the physical exercise; and
receiving (1106), from the server, monitoring data indicative of at least the determined execution quality of the physical exercise.

14. The method of claim 13, further comprising:
determining a visual and/or acoustic feedback for the user based on the received monitoring data; and
outputting the visual and/or acoustic feedback to the user.

15. The method of claim 13 or claim 14, wherein the local device is a mobile device, and wherein the method further comprises:
determining an orientation of the radar sensor using a gyroscope of the local device, wherein the gyroscope outputs orientation data indicative of the orientation of the radar sensor; and
transmitting the orientation data to the server in order to enable the trained machine-learning model to determine at least one of the type of the physical exercise and the execution quality of the physical exercise further based on the orientation data.

## Amended claims

### Amended claims in accordance with Rule 137(2) EPC.

1. A method (1000) of monitoring a user performing a physical exercise, the method comprising:
performing (1002) a radar measurement of the user performing the physical exercise using a radar sensor, wherein the radar sensor outputs radar data indicative of the radar measurement, and wherein the radar sensor is included in a mobile device, the mobile device being a smartphone or a tablet-computer;
determining an orientation of the radar sensor using a gyroscope of the mobile device, wherein the gyroscope outputs orientation data indicative of the orientation of the radar sensor;
determining (1004) a type of the physical exercise based on the radar data using a trained machine-learning model;
determining (1006) an execution quality of the physical exercise based on the radar data and the determined type of the physical exercise using the trained machine-learning model; and
outputting (1008) monitoring data indicative of at least the determined execution quality of the physical exercise,
wherein at least one of the type of the physical exercise and the execution quality of the physical exercise is determined by the trained machine-learning model further based on the orientation data.

2. The method of claim 1, further comprising:
pre-processing the radar data in order to determine a respective temporal course for one or more physical quantities,
wherein determining (1004) the type of the physical exercise based on the radar data comprises determining the type of the physical exercise based on the respective temporal course for at least one of the one or more physical quantities using the trained machine-learning model, and
wherein determining (1006) the execution quality of the physical exercise based on the radar data comprises determining the execution quality of the physical exercise based on the respective temporal course for at least one of the one or more physical quantities using the trained machine-learning model.

3. The method of claim 2, wherein the one or more physical quantities comprise at least one of a distance of a body part of the user to the radar sensor during the radar measurement, a doppler shift during the radar measurement, a velocity of the body part of the user with respect to the radar sensor during the radar measurement, an azimuth of the body part of the user with respect to the radar sensor during the radar measurement, and an elevation of the body part of the user with respect to the radar sensor during the radar measurement.

4. The method of any one of claims 1 to 3, further comprising:
determining a visual and/or acoustic feedback for the user based on the monitoring data; and
outputting the visual and/or acoustic feedback to the user.

5. A mobile device (100) configured for monitoring a user performing a physical exercise, the mobile device (100) being a smartphone or a tablet-computer, the mobile device (100) comprising:
a radar sensor (110) configured to perform a radar measurement of the user performing the physical exercise and output radar data (111) indicative of the radar measurement;
a gyroscope configured to determine an orientation of the radar sensor (110) and output orientation data indicative of the orientation of the radar sensor (110); and
processing circuitry (120) configured to:
determine a type of the physical exercise based on the radar data (111) using a trained machine-learning model;
determine an execution quality of the physical exercise based on the radar data (111) and the determined type of the physical exercise using the trained machine-learning model; and
output monitoring data (121) indicative of at least the determined execution quality of the physical exercise,
wherein the processing circuitry (120) is further configured to determine at least one of the type of the physical exercise and the execution quality of the physical exercise further based on the orientation data using the trained machine-learning model.

6. The mobile device (100) of claim 5,
wherein the processing circuitry (120) is further configured to pre-process the radar data in order to determine a respective temporal course for one or more physical quantities,
wherein the processing circuitry (120) is further configured to determine the type of the physical exercise based on the radar data comprises determining the type of the physical exercise based on the respective temporal course for at least one of the one or more physical quantities using the trained machine-learning model, and
wherein the processing circuitry (120) is further configured to determine the execution quality of the physical exercise based on the radar data comprises determining the execution quality of the physical exercise based on the respective temporal course for at least one of the one or more physical quantities using the trained machine-learning model.

7. The mobile device (100) of claim 6, wherein the one or more physical quantities comprise at least one of a distance of a body part of the user to the radar sensor during the radar measurement, a doppler shift during the radar measurement, a velocity of the body part of the user with respect to the radar sensor during the radar measurement, an azimuth of the body part of the user with respect to the radar sensor during the radar measurement, and an elevation of the body part of the user with respect to the radar sensor during the radar measurement.

8. The mobile device (100) of any one of claims 5 to 7,
wherein the processing circuitry (120) is further configured to determine a visual and/or acoustic feedback for the user based on the monitoring data, and
wherein the mobile device (100) further comprises a loudspeaker and/or a display configured to output the visual and/or acoustic feedback to the user.

9. A method (1100) for a mobile device of monitoring a user performing a physical exercise, the mobile device being a smartphone or a tablet-computer, the method comprising:
performing (1102) a radar measurement of the user performing the physical exercise using a radar sensor of the mobile device, wherein the radar sensor outputs radar data indicative of the radar measurement;
determining an orientation of the radar sensor using a gyroscope of the local device, wherein the gyroscope outputs orientation data indicative of the orientation of the radar sensor;
transmitting (1104) the radar data and the orientation data to a server running a trained machine-learning model for determining a type of the physical exercise and an execution quality of the physical exercise based on the radar data and the orientation data; and
receiving (1106), from the server, monitoring data indicative of at least the determined execution quality of the physical exercise.

10. The method (1100) of claim 9, further comprising:
determining a visual and/or acoustic feedback for the user based on the received monitoring data; and
outputting the visual and/or acoustic feedback to the user.

11. A mobile device (200) configured for monitoring a user performing a physical exercise, the mobile device (200) being a smartphone or a tablet-computer, the mobile device (200) comprising:
a radar sensor (110) configured to perform a radar measurement of the user performing the physical exercise and output radar data indicative of the radar measurement;
a gyroscope configured to determine an orientation of the radar sensor (110) and output orientation data indicative of the orientation of the radar sensor (110); and
a transmitter (130) configured to transmit the radar data and the orientation data to a server (250) running a trained machine-learning model for determining a type of the physical exercise and an execution quality of the physical exercise based on the radar data and the orientation data; and
a receiver (140) configured to receive, from the server (250), monitoring data indicative of at least the determined execution quality of the physical exercise.

12. The mobile device (200) of claim 11, further comprising:
processing circuitry configured to determine a visual and/or acoustic feedback for the user based on the monitoring data; and
a loudspeaker and/or a display configured to output the visual and/or acoustic feedback to the user.
